# EUROPEAN PATENT APPLICATION

(11) **EP 4 546 809 A1**
(43) Date of publication of application: **30.04.2025**
(21) Application number: 23869975.5
(22) Date of filing: 01.08.2023
(51) Int. Cl.: H04N 23/68

(54) **PERISCOPIC CAMERA MODULE, OPTICAL IMAGE STABILIZING METHOD, AND RELATED DEVICE**

(30) Priority: 26.09.2022 CN 202211173781
(71) Applicant: Huawei Technologies Co., Ltd., Shenzhen, Guangdong 518129 (CN)
(72) Inventor: YANG, Chuan, Shenzhen, Guangdong 518129 (CN); REN, Rong, Shenzhen, Guangdong 518129 (CN); WANG, Li, Shenzhen, Guangdong 518129 (CN); KUO, Li-Te, Shenzhen, Guangdong 518129 (CN)
(74) Representative: Körber, Martin Hans
(86) International application number: PCT/CN2023/110516
(87) International publication number: WO 2024/066729

(57) **Abstract**

This application discloses a periscope camera module that may be used in a terminal device having an image shooting function and the like. The periscope camera module includes an optical path steering element, a lens group, an imaging element, a first image stabilization component, and a second image stabilization component. The optical path steering element is configured to perform angle folding on incident light, and then perform imaging on the imaging element through the lens group. The first image stabilization component is connected to the optical path steering element, and is configured to drive the optical path steering element to rotate around the first axis, where the first axis is perpendicular to a plane formed by an input optical axis and an output optical axis of the optical path steering element. The second image stabilization component is flexibly connected to the imaging element, and is configured to drive the imaging element to move in an extension direction of the first axis. Movement of each axis is decoupled through a two-stage image stabilization mechanism, to overcome a contradiction between an image stabilization angle and module space, avoid introducing image rotation, and ensure image quality.

## Description

This application claims priority to Chinese Patent Application No. 202211173781.5, filed with the China National Intellectual Property Administration on September 26, 2022 and entitled "PERISCOPE CAMERA MODULE, OPTICAL IMAGE STABILIZATION METHOD, AND RELATED DEVICE", which is incorporated herein by reference in its entirety.

### TECHNICAL FIELD

This application relates to the field of electronic technologies, and in particular, to a periscope camera module, an optical image stabilization method, and a related device.

### BACKGROUND

With development of imaging technologies and electronic products, camera performance has become a major selling point of mobile phones, and telephoto lenses that can clearly capture a distant object has attracted more attention. However, limited by thicknesses of the mobile phones, common vertical telephoto lenses cannot capture a distant object as expected. To improve long-distance image shooting performance, a periscope telephoto module architecture is proposed. A periscope telephoto module uses an optical path steering element (for example, a prism) to fold light into an imaging element (for example, an image sensor), so that a focal length that should be on a straight line is bent. Therefore, a lens and a sensor of the periscope telephoto module may be horizontally arranged in the periscope telephoto module, and a thickness of the lens module is effectively reduced.

Currently, application scenarios of an image shooting function of a mobile phone are also continuously expanded. In an image shooting process, blurring or shaking is likely to occur due to external vibration, affecting quality of a finished image.

Therefore, how to resolve a shake problem of the mobile phone in an image shooting process is a technical problem to be urgently resolved.

### SUMMARY

This application provides a periscope camera module, an optical image stabilization method, and a related device, to decouple movement of each axis through a two-stage image stabilization mechanism, to overcome a contradiction between an image stabilization angle and module space, avoid introducing image rotation, and ensure image quality.

A first aspect of embodiments of this application provides a periscope camera module. The periscope camera module may be used in a terminal device (for example, a mobile phone, a tablet, a notebook computer, a wearable device, or a video surveillance device) having a photographing or video recording function or the like. The periscope camera module includes an optical path steering element, a lens group, an imaging element, a first image stabilization component, and a second image stabilization component. The optical path steering element is configured to perform angle folding on incident light, and then perform imaging on the imaging element through the lens group. The first image stabilization component is connected to the optical path steering element, and is configured to drive the optical path steering element to rotate around the first axis, where the first axis is perpendicular to a plane formed by an input optical axis and an output optical axis of the optical path steering element. The second image stabilization component is flexibly connected to the imaging element, and is configured to drive the imaging element to move in an extension direction of the first axis.

In embodiment of this application, when the first image stabilization component performs image stabilization in a vertical direction by driving the optical path steering element to move, a large image stabilization angle can be met without a large translation distance being set in the direction. When the second image stabilization component drives the imaging element to move in the extension direction of the first axis to perform translation, movable space is not limited by a module height, and an image stabilization requirement is met. In addition, in comparison with a scenario in which the optical path steering element is driven to move in two axes, in this scenario, the first image stabilization component controls only the optical path steering element to rotate around one axis, to avoid introducing image rotation. In addition, because the optical path steering element does not need to perform swing movement, relative positions of the optical path steering element and the lens group are fixed, and a larger margin can be provided in limited space for design and deployment of the lens group. In other words, the first image stabilization component and the second image stabilization component do not affect each other and are not coupled, and control logic is simple. In other words, movement of each axis is decoupled through two-stage image stabilization, to overcome a contradiction between an image stabilization angle and module space, avoid introducing image rotation (for example, image deflection caused by rotation of the optical path steering element around a Z axis), and ensure image quality.

Optionally, in a possible implementation of the first aspect, the second image stabilization component is further configured to drive the imaging element to rotate around a second axis, and the second axis is parallel to the output optical axis of the optical path steering element.

In this possible implementation, image stabilization of the periscope camera module on a plane on which the imaging element is located is further implemented. Further, the optical path steering unit rotates around the first axis, the imaging element moves along the first axis, and the imaging element rotates around the second axis, to implement multi-axis image stabilization, increase an image stabilization dimension and an image stabilization gain, and improve imaging quality.

Optionally, in a possible implementation of the first aspect, the first image stabilization component has a tilted platform, and the optical path steering unit is drivably disposed on the platform.

In this possible implementation, through a design of the tilted platform, when the first image stabilization component performs shaking compensation in a vertical direction by driving the optical path steering element to move, a large image stabilization angle can be met without a large translation distance being set in the direction.

A second aspect of embodiments of this application provides an optical image stabilization method. The method may be applied to a periscope camera module, or applied to a terminal device including the periscope camera module. The periscope camera module includes an optical path steering element, a lens group, an imaging element, a first image stabilization component, and a second image stabilization component. The optical path steering element is configured to perform angle folding on incident light, and then perform imaging on the imaging element through the lens group. The first image stabilization component is connected to the optical path steering element, and is configured to drive the optical path steering element to rotate around the first axis, where the first axis is perpendicular to a plane formed by an input optical axis and an output optical axis of the optical path steering element. The second image stabilization component is flexibly connected to the imaging element, and is configured to drive the imaging element to move in an extension direction of the first axis. The method includes: obtaining shaking data of the periscope camera module; decomposing the shaking data into first compensation data and second compensation data, where the first compensation data is a first rotation angle of the optical path steering element around the first axis, and the second compensation data includes a translation distance of the imaging element along the first axis; controlling the first image stabilization component to drive the optical path steering element to rotate around the first axis based on the first rotation angle; and controlling the second image stabilization component to drive the imaging element to translate along the first axis based on the translation distance.

In embodiment of this application, when the first image stabilization component is controlled to perform shaking compensation in a vertical direction by driving the optical path steering element to move, a large image stabilization angle can be met without a large translation distance being set in the direction. When the second image stabilization component is controlled to perform translational shaking compensation by driving the imaging element to move, movable space is not limited by a module height, and an image stabilization requirement is met. In addition, in comparison with a scenario in which the optical path steering element is driven to move in two axes, in this scenario, only the first image stabilization component is controlled to drive the optical path steering element to rotate around one axis, to avoid introducing image rotation. In addition, because the optical path steering element does not need to perform swing movement, relative positions of the optical path steering element and the lens group are fixed, and a larger margin can be provided in limited space for design and deployment of the lens group. In other words, the first image stabilization component and the second image stabilization component do not affect each other and are not coupled, and control logic is simple. In other words, movement of each axis is decoupled through two-stage image stabilization, to overcome a contradiction between an image stabilization angle and module space, avoid introducing image rotation (for example, image deflection caused by rotation of the optical path steering element around a Z axis), and ensure image quality.

Optionally, in a possible implementation of the second aspect, the second image stabilization component is further configured to drive the imaging element to rotate around a second axis, and the second axis is parallel to the output optical axis of the optical path steering element; and the second compensation data further includes a second rotation angle of the imaging element around the second axis. The method further includes controlling the second image stabilization component to drive the imaging element to move around the second axis based on the second rotation angle.

In this possible implementation, image stabilization of the periscope camera module on a plane on which the imaging element is located is further implemented. Further, the optical path steering unit rotates around the first axis, the imaging element moves along the first axis, and the imaging element rotates around the second axis, to implement multi-axis image stabilization, increase an image stabilization dimension and an image stabilization gain, and improve imaging quality.

A third aspect of embodiments of this application provides a terminal device. A periscope camera module may be used in the terminal device. The terminal device may be a mobile phone, a tablet, a notebook computer, a wearable device, a video surveillance device, or the like. The periscope camera module includes an optical path steering element, a lens group, an imaging element, a first image stabilization component, and a second image stabilization component. The optical path steering element is configured to perform angle folding on incident light, and then perform imaging on the imaging element through the lens group. The first image stabilization component is connected to the optical path steering element, and is configured to drive the optical path steering element to rotate around the first axis, where the first axis is perpendicular to a plane formed by an input optical axis and an output optical axis of the optical path steering element. The second image stabilization component is flexibly connected to the imaging element, and is configured to drive the imaging element to move in an extension direction of the first axis. The terminal device includes: an obtaining unit, configured to obtain shaking data of the periscope camera module; a decomposition unit, configured to decompose the shaking data into first compensation data and second compensation data, where the first compensation data is a first rotation angle of the optical path steering element around the first axis, and the second compensation data includes a translation distance of the imaging element along the first axis; a first control unit, configured to control the first image stabilization component to drive the optical path steering to rotate around the first axis based on the first rotation angle; and a second control unit, configured to control the second image stabilization component to drive the imaging element to translate along the first axis based on the translation distance.

Optionally, in a possible implementation of the third aspect, the second image stabilization component is further configured to drive the imaging element to rotate around a second axis, and the second axis is parallel to the output optical axis of the optical path steering element. The second compensation data further includes a second rotation angle of the imaging element around the second axis, and the second axis is parallel to the output optical axis of the optical path steering element.

The second control unit is further configured to control the second image stabilization component to drive the imaging element to move around the second axis based on the second rotation angle.

A fourth aspect of embodiments of this application provides a terminal device. The terminal device includes a housing and the periscope camera module according to any one of the first aspect or the possible implementations of the first aspect. The periscope camera module is mounted on the housing.

A fifth aspect of embodiments of this application provides a terminal device. The terminal device is configured to implement the method according to any one of the second aspect or the possible implementations of the second aspect.

A sixth aspect of embodiments of this application provides a chip. The chip includes a processor and a communication interface. The communication interface is coupled to the processor. The processor is configured to run a computer program or instructions, so that the method according to any one of the second aspect or the possible implementations of the second aspect is performed.

A seventh aspect of embodiments of this application provides a computer-readable medium. The computer-readable medium stores a computer program or instructions. When the computer program or the instructions are run on a computer, the computer is enabled to perform the method according to any one of the second aspect or the possible implementations of the second aspect.

An eighth aspect of embodiments of this application provides a computer program product. When the computer program product is executed on a computer, the computer is enabled to perform the method according to any one of the second aspect or the possible implementations of the second aspect.

It can be learned from the foregoing technical solutions that this application has the following advantages: The first image stabilization component and the second image stabilization component in the periscope camera module are used to form a two-stage image stabilization solution. In other words, the first image stabilization component is connected to the optical path steering element, and is configured to drive the optical path steering element to rotate around the first axis, to implement image stabilization of the periscope camera module in the vertical direction. The second image stabilization component is flexibly connected to the imaging element, and is configured to drive the imaging element to move in the extension direction of the first axis, to implement image stabilization of the periscope camera module in a horizontal direction. Movement of each axis is decoupled through a two-stage image stabilization mechanism, to overcome a contradiction between an image stabilization angle and module space, avoid introducing image rotation, and ensure image quality.

### BRIEF DESCRIPTION OF DRAWINGS

FIG. 1 is a diagram of a structure of a terminal device according to an embodiment of this application;
FIG. 2 is a diagram of a structure of a periscope camera module according to an embodiment of this application;
FIG. 3 is a diagram of an image stabilization movement of a periscope camera module according to an embodiment of this application;
FIG. 4 is a diagram of a structure of a first image stabilization component and an optical path steering element according to an embodiment of this application;
FIG. 5 is a diagram in which an optical path steering element performs X-axis rotation according to an embodiment of this application;
FIG. 6 is a diagram of a structure of a second image stabilization component and an imaging element according to an embodiment of this application;
FIG. 7 is a diagram in which an imaging element performs X-axis movement according to an embodiment of this application;
FIG. 8 is a diagram of another image stabilization movement of a periscope camera module according to an embodiment of this application;
FIG. 9 is a diagram in which an imaging element performs Y-axis rotation according to an embodiment of this application;
FIG. 10 is a schematic flowchart of an optical image stabilization method according to an embodiment of this application;
FIG. 11 is a diagram of another structure of a terminal device according to an embodiment of this application; and
FIG. 12 is a diagram of another structure of a terminal device according to an embodiment of this application.

### DESCRIPTION OF EMBODIMENTS

This application provides a periscope camera module, an optical image stabilization method, and a related device, to decouple movement of each axis through a two-stage image stabilization mechanism, to overcome a contradiction between an image stabilization angle and module space, avoid introducing image rotation, and ensure image quality.

Currently, application scenarios of an image shooting function of a mobile phone are also continuously expanded. In an image shooting process, blurring or shaking is likely to occur due to external vibration, affecting quality of a finished image. Therefore, how to resolve a shake problem of the mobile phone in an image shooting process is a technical problem to be urgently resolved.

To resolve the foregoing problem, embodiments of this application provide a periscope camera module. A first image stabilization component and a second image stabilization component in the periscope camera module are used to form a two-stage image stabilization solution. In other words, the first image stabilization component is connected to an optical path steering element, and is configured to drive the optical path steering element to rotate around the first axis, to implement image stabilization of the periscope camera module in a vertical direction. The second image stabilization component is flexibly connected to an imaging element, and is configured to drive the imaging element to move in an extension direction of the first axis, to implement image stabilization of the periscope camera module in a horizontal direction. Movement of each axis is decoupled through a two-stage image stabilization mechanism, to overcome a contradiction between an image stabilization angle and module space, avoid introducing image rotation, and ensure image quality.

Before the periscope camera module, the optical image stabilization method, and the related device provided in embodiments of this application are described, application scenarios to which the periscope camera module, the optical image stabilization method, and the related device provided in embodiments of this application are applicable are first described.

The periscope camera module provided in embodiments of this application may be used in a terminal device having an image shooting function. The terminal device may be a mobile phone, a tablet, a notebook computer, a wearable device (for example, a smartwatch or a band), a video surveillance device, or the like. This is not specifically limited herein.

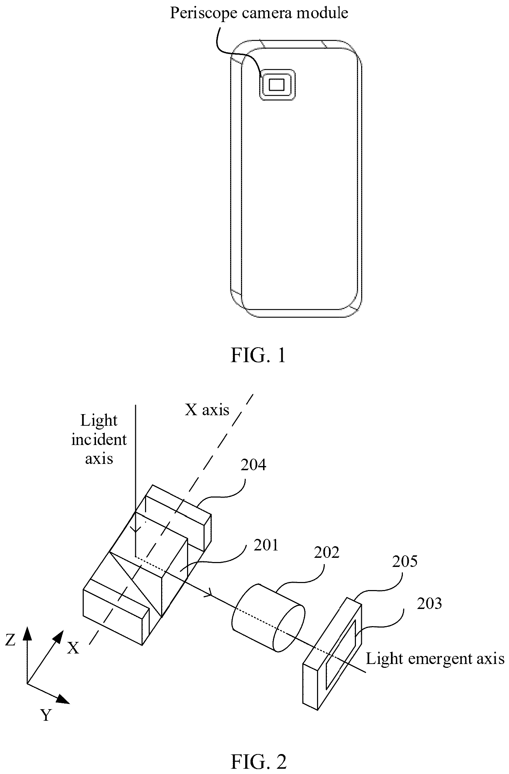

For example, the periscope camera module provided in embodiments of this application may be used in a rear-facing camera of a mobile phone shown in FIG. 1.

The following describes in detail the periscope camera module provided in embodiments of this application. FIG. 2 is a diagram of a structure of a periscope camera module according to an embodiment of this application.

The periscope camera module includes an optical path steering element 201, a lens group 202, an imaging element 203, a first image stabilization component 204, and a second image stabilization component 205.

The optical path steering element 201 is configured to perform angle folding on incident light, and then perform imaging on the imaging element 203 through the lens group 202. The optical path steering element 201 has a reflective surface, and the reflective surface is specifically configured to fold an angle of the incident light. An axis on which the incident light enters the reflective surface is referred to as an input optical axis, and an axis on which the incident light is reflected by the reflective surface is referred to as an output optical axis.

Optionally, the output optical axis is parallel to an optical axis of the lens group 202.

For example, the first image stabilization component 204 has a tilted platform, and the optical path steering unit 201 is drivably disposed on the platform. The optical path steering element 201 is configured to fold the incident light by 90 degrees (that is, an included angle between the input optical axis and the output optical axis is 90 degrees). It may be understood that 90-degree folding is merely an example, and the angle may be set based on an actual requirement. This is not specifically limited herein.

In embodiments of this application, a structure of the optical path steering element 201 may be set based on an actual requirement. This is not limited herein. In embodiments of this application, only an example in which the optical path steering element 201 is a prism (for example, a triangular prism structure) is used. In actual application, the optical path steering element 201 may alternatively be a structure having a reflection function, such as another structure (for example, a plane mirror). This is not specifically limited herein.

The lens group 202 includes at least one lens configured to implement a telephoto function. The lens is configured to project the incident light onto the imaging element 203 for imaging.

The imaging element 203 may also be referred to as an image sensor or a photosensitive element, and is mainly configured to convert an optical signal into an electrical signal for imaging.

The first image stabilization component 204 is connected to the optical path steering element 201, and is configured to drive the optical path steering element 201 to rotate around a first axis, to implement image stabilization of the periscope camera module in a vertical direction. The first axis is perpendicular to a plane formed by the input optical axis and the output optical axis of the optical path steering element 201. In other words, the first axis is an X axis in FIG. 2. The vertical direction is an extension direction of a Z axis in FIG. 2, that is, the vertical direction is perpendicular to a plane formed by the X axis and a Y axis in FIG. 2.

The second image stabilization component 205 is connected to the imaging element 203, and is configured to drive the imaging element 203 to move in an extension direction of the first axis, to implement image stabilization of the periscope camera module in a horizontal direction. The horizontal direction is an extension direction of the X axis in FIG. 2, that is, the horizontal direction is perpendicular to a plane formed by the Y axis and the Z axis in FIG. 2.

A function of the first image stabilization component 204 may also be understood as implementing image stabilization of the imaging element 203 in the vertical direction (namely, the Z axis). A function of the second image stabilization component 205 may also be understood as implementing image stabilization of the imaging element 203 in the horizontal direction (namely, the X axis).

Optionally, the periscope camera module provided in embodiments of this application may further include a focusing component (not shown in the figure). The focusing component is configured to push the lens group 202 to translate in an optical axis direction, to implement a focusing function.

In embodiments, when the first image stabilization component 204 performs image stabilization in the vertical direction by driving the optical path steering element 201 to move, a large image stabilization angle can be met without a large translation distance being set in the direction. When the second image stabilization component 205 drives the imaging element 203 to move in the extension direction of the first axis to perform translation, movable space is not limited by a module height, and an image stabilization requirement is met.

In addition, in comparison with a scenario in which the optical path steering element 201 is driven to move in two axes, in this scenario, the first image stabilization component 204 controls only the optical path steering element 201 to rotate around one axis, to avoid introducing image rotation. In addition, because the optical path steering element 201 does not need to perform swing movement, relative positions of the optical path steering element 201 and the lens group 202 are fixed, and a larger margin can be provided in limited space for design and deployment of the lens group 202. In other words, the first image stabilization component 204 and the second image stabilization component 205 do not affect each other and are not coupled, and control logic is simple. In other words, movement of each axis is decoupled through two-stage image stabilization, to overcome a contradiction between an image stabilization angle and module space, avoid introducing image rotation (for example, image deflection caused by rotation of the optical path steering element 201 around the Z axis), and ensure image quality.

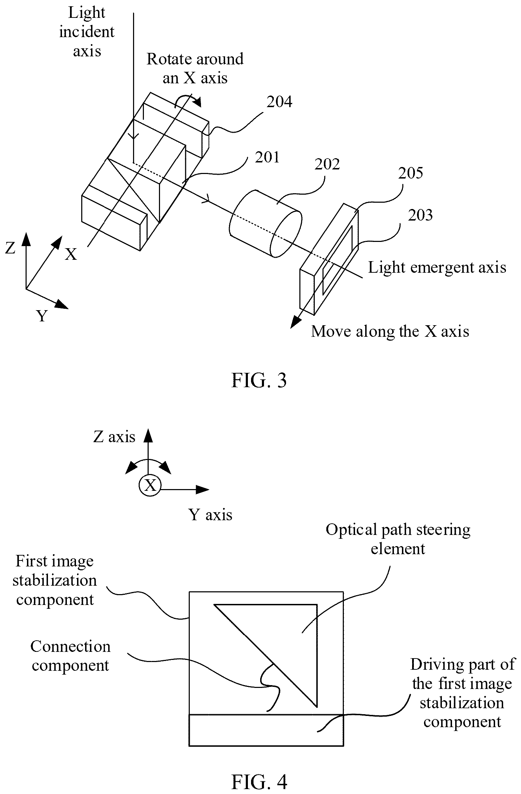

To facilitate understanding of how to implement image stabilization of the periscope camera module, the following describes in detail, with reference to FIG. 3, how the first image stabilization component 204 drives the optical path steering element 201 to move and how the second image stabilization component 205 drives the imaging element 203 to move.

Refer to FIG. 3. The first image stabilization component 204 is specifically configured to drive the optical path steering element 201 to rotate around the first axis, to implement image stabilization of the periscope camera module along a third axis (namely, the Z axis in FIG. 3, which may also be referred to as the vertical direction, where the vertical direction is perpendicular to the plane formed by the X axis and the Y axis in FIG. 2).

The second image stabilization component 205 is specifically configured to drive the imaging element 203 to move in the extension direction of the first axis, to implement image stabilization of the periscope camera module along the first axis (namely, the X axis).

In this embodiment, when the first image stabilization component 204 performs shaking compensation in a vertical direction by driving the optical path steering element 201 to rotate around the X axis, a large image stabilization angle can be met without a large translation distance being set in the direction. When the second image stabilization component 205 drives the imaging element 203 to perform X-axis translational shaking compensation, movable space is not limited by the module height, and an image stabilization requirement is met.

The following describes a structure of an image stabilization component (namely, the first image stabilization component 204 and the second image stabilization component 205).

Refer to FIG. 4. The first image stabilization component 204 is connected to the optical path steering element 201 through a connection component, and a driving part of the first image stabilization component 204 drives, through the connection component, the optical path steering element 201 to rotate around the X axis.

Different movement modes may be configured for the driving part of the first image stabilization component 204, to drive the optical path steering element 201 to rotate clockwise and counterclockwise around the X axis.

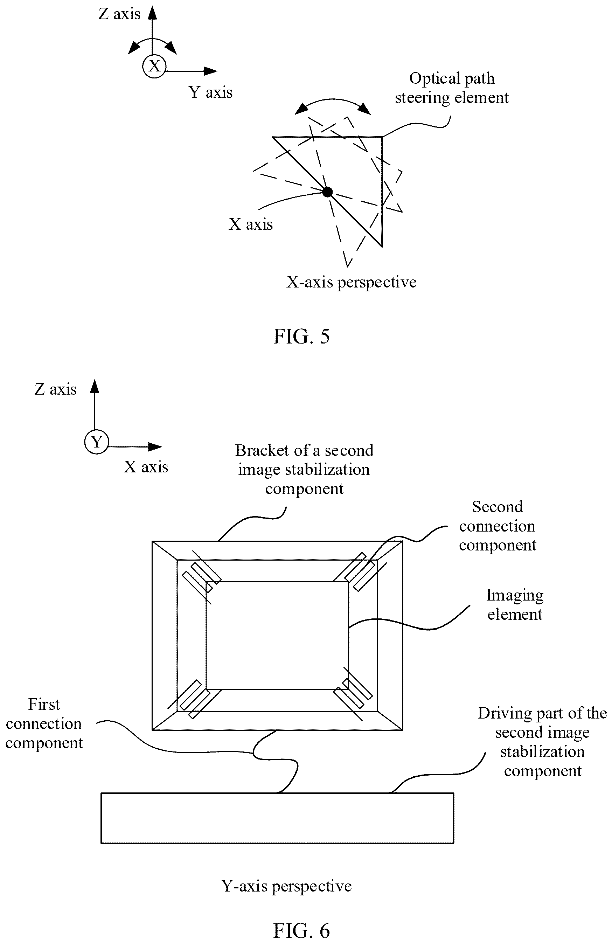

For example, from an X-axis perspective, FIG. 5 is a diagram in which the driving part of the first image stabilization component 204 drives, through the connection component, the optical path steering element 201 to rotate around the X axis.

The connection component may be a transmission shaft or a flexible connection component, for example, at least one component having an elastic function, for example, a trace suspension assembly (trace suspension assembly, TSA), a spring, or a suspension wire. This is not specifically limited herein.

Optionally, the first image stabilization component 204 may be a concave body with an inclined surface. The inclined surface is connected to the optical path steering element 201 through the connection component. The first image stabilization component 204 avoids, through protrusions on two sides, the optical path steering element 201 to translate along a second axis.

It may be understood that the first image stabilization component 204 may further include a circuit assembly, a position sensor, and the like. This is not specifically limited herein.

Refer to FIG. 6. The second image stabilization component 205 is connected to the imaging element 203, and a driving part of the second image stabilization component 205 drives the imaging element 203 to implement X-axis translation.

Specifically, the second image stabilization component 205 is connected to the imaging element 203 through a first connection component. The driving part of the second image stabilization component 205 drives the first connection component, to implement translation of the imaging element 203 along the X axis.

The second image stabilization component 205 includes the driving part and a bracket. The bracket is softly connected to the imaging element 203 through a second connection component. The imaging element 203 implements translation along the X axis through the driving part that drives the first connection component.

Different movement modes may be configured for the driving part of the second image stabilization component 205, to drive the imaging element 203 to implement left-right translation along the X axis.

The first connection component may be a spring or the like, and the second connection component may be a suspension wire or the like. This is not specifically limited herein.

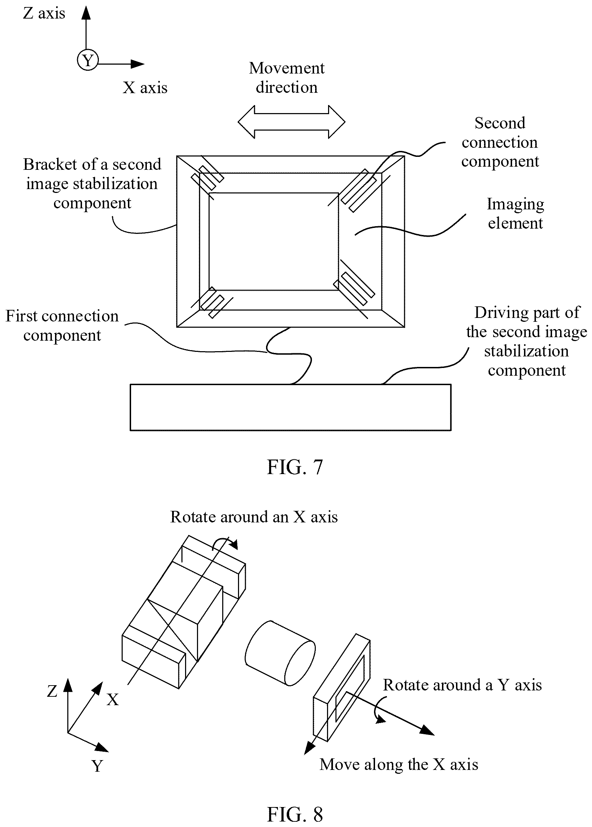

For example, from a Y-axis perspective, FIG. 7 is a diagram in which the driving part of the second image stabilization component 205 drives, through the first connection component, the imaging element 203 to translate along the X axis.

Optionally, the second image stabilization component 205 may be a hollow cube. The imaging element 203 is placed in the middle of the second image stabilization component 205, and the bracket in the second image stabilization component 205 is connected to the imaging element 203 through the second connection component.

It may be understood that the second image stabilization component 205 may further include a circuit assembly, a position sensor, and the like. This is not specifically limited herein.

In addition, to reduce shaking of the periscope camera module on a plane on which the imaging element 203 is located, as shown in FIG. 8, the second image stabilization component 205 in the foregoing embodiment may be further configured to drive the imaging element 203 to rotate around the second axis (namely, the Y axis), to implement image stabilization of the periscope camera module on the plane on which the imaging element 203 is located. The second axis is parallel to the output optical axis of the optical path steering element 201.

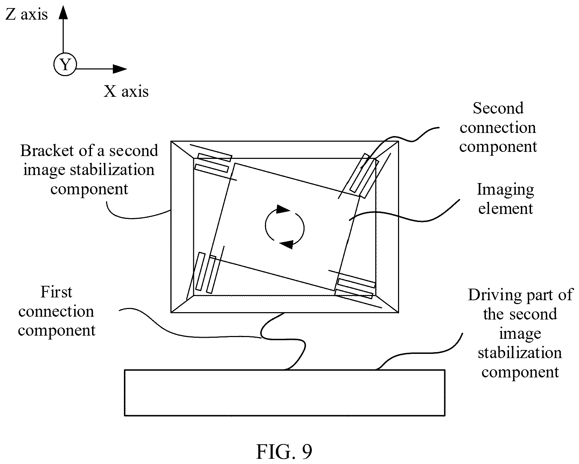

For example, from the Y-axis perspective, FIG. 9 is a diagram in which the driving part of the second image stabilization component 205 drives, through the first connection component, the imaging element 203 to rotate around the Y axis, to implement image stabilization of the periscope camera module on the plane on which the imaging element 203 is located.

In this embodiment, image stabilization of the periscope camera module on the plane on which the imaging element is located is further implemented. Further, the optical path steering unit rotates around the first axis, the imaging element moves along the first axis, and the imaging element rotates around the second axis, to implement multi-axis image stabilization, increase an image stabilization dimension and an image stabilization gain, and improve imaging quality.

The foregoing describes the periscope camera module provided in embodiments of this application. The following describes the optical image stabilization method and the related device provided in embodiments of this application.

The optical image stabilization method provided in embodiments of this application is applied to a periscope camera module. The periscope camera module includes an optical path steering element, a lens group, an imaging element, a first image stabilization component, and a second image stabilization component. The optical path steering element is configured to perform angle folding on incident light, and then perform imaging on the imaging element through the lens group. The first image stabilization component is connected to the optical path steering element, and is configured to drive the optical path steering element to rotate around the first axis, where the first axis is perpendicular to a plane formed by an input optical axis and an output optical axis of the optical path steering element. The second image stabilization component is flexibly connected to the imaging element, and is configured to drive the imaging element to move in an extension direction of the first axis. Alternatively, it is understood that the method may be applied to the periscope camera module in any one of FIG. 2 to FIG. 9.

It may be understood that the method may alternatively be performed by a terminal device or a component (for example, a processor, a chip, or a chip system) of a terminal device. The terminal device includes the foregoing periscope camera module. In other words, the method may be performed by the periscope camera module, or may be performed by a terminal device in which the periscope camera module is located. This is not specifically limited herein.

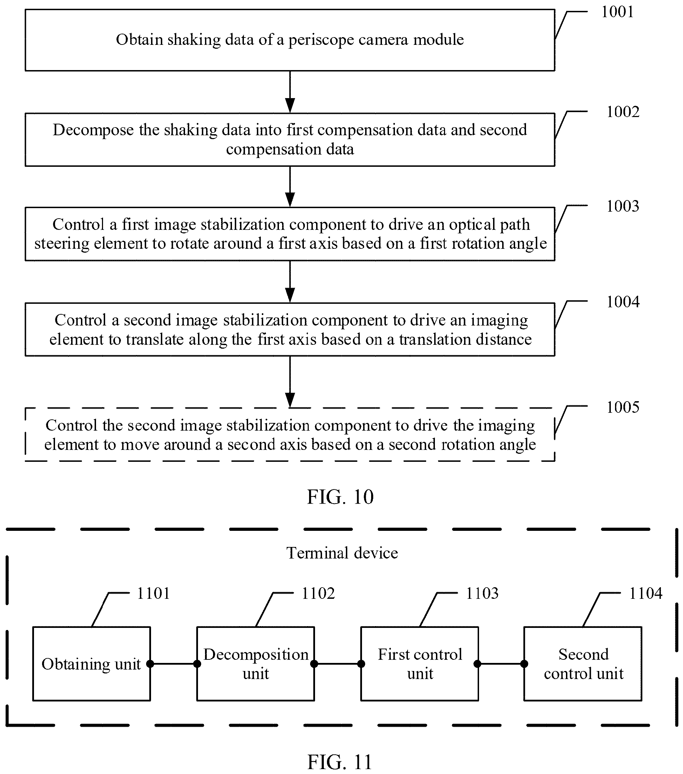

FIG. 10 is a schematic flowchart of an optical image stabilization method according to an embodiment of this application. The method may include step 1001 to step 1005. The following describes step 1001 to step 1005 in detail.

Step 1001: Obtain shaking data of a periscope camera module.

The shaking data of the periscope camera module is obtained. The shaking data may be represented by an angle, a distance, a pose, or the like. This is not specifically limited herein.

The shaking data may be obtained through hardware such as a gyroscope and/or an accelerometer. In other words, the shaking data may include at least one of the following: an angular velocity collected by the gyroscope, a displacement acceleration collected by the accelerometer, and the like.

Step 1002: Decompose the shaking data into first compensation data and second compensation data.

After the shaking data is obtained, the shaking data may be decomposed into the first compensation data and the second compensation data. The first compensation data is a first rotation angle of an optical path steering element around a first axis. The second compensation data includes a translation distance of an imaging element along the first axis. The first axis is perpendicular to a plane formed by an input optical axis and an output optical axis of the optical path steering element.

This step may alternatively be understood as decoupling shaking data of different axes, to facilitate subsequent decoupling compensation on shaking of the different axes.

Optionally, after the shaking data is obtained, filtering calculation is performed on the shaking data based on the different axes, to obtain filtered shaking data of each axis. Further, a pose of the periscope camera module is calculated according to a pose estimation algorithm, to facilitate subsequent reverse compensation.

In addition, the shaking data includes the angular velocity collected by the gyroscope and/or the displacement acceleration collected by the accelerometer. The angular velocity and/or the displacement acceleration need/needs to be decomposed and projected onto each axis, to determine compensation data of each axis.

Step 1003: Control a first image stabilization component to drive the optical path steering element to rotate around the first axis based on the first rotation angle.

After the shaking data is decomposed into the first rotation angle of the optical path steering element around the first axis and the translation distance of the imaging element along the first axis, the first image stabilization component is controlled to drive the optical path steering element to rotate around the first axis based on the first rotation angle, to implement shaking compensation of the periscope camera module in a vertical direction, where the first axis is perpendicular to the plane formed by the input optical axis and the output optical axis of the optical path steering element.

In this embodiment of this application, shaking compensation of each axis is usually obtained by decomposing shaking data of each axis and projecting decomposed shaking data to each axis. In actual application, shaking compensation may alternatively be multiplied by a correction coefficient to perform partial correction, and the like. This is not specifically limited herein.

Optionally, the image stabilization component in this embodiment of this application may include a driving part, a drive chip, a position sensor, and the like. The drive chip is configured to control the driving part to move. The position sensor is configured to collect a position of the optical path steering element or the imaging element, to determine shaking compensation.

Step 1004: Control a second image stabilization component to drive the imaging element to translate along the first axis based on the translation distance.

After the shaking data is decomposed into the first rotation angle of the optical path steering element around the first axis and the translation distance of the imaging element along the first axis, the second image stabilization component is controlled to drive the imaging element to translate along the first axis based on the translation distance, to implement shaking compensation of the periscope camera module in a horizontal direction.

Step 1005: Control the second image stabilization component to drive the imaging element to move around a second axis based on a second rotation angle. This step is optional.

Optionally, when the second image stabilization component is further configured to drive the imaging element to rotate around the second axis, the second compensation data further includes the second rotation angle of the imaging element around the second axis, and the second axis is parallel to the output optical axis of the optical path steering element.

Optionally, the second image stabilization component is controlled to drive the imaging element to rotate around the second axis based on the second rotation angle, to implement shaking compensation of the periscope camera module on a plane on which the imaging element is located.

In a possible implementation, the optical image stabilization solution provided in embodiments of this application includes step 1001 to step 1004. In this case, when the first image stabilization component is controlled to perform shaking compensation in a vertical direction by driving the optical path steering element to move, a large image stabilization angle can be met without a large translation distance being set in the direction. When the second image stabilization component is controlled to perform translational shaking compensation by driving the imaging element to move, movable space is not limited by a module height, and an image stabilization requirement is met. In addition, in comparison with a scenario in which the optical path steering element is driven to move in two axes, in this scenario, only the first image stabilization component is controlled to drive the optical path steering element to rotate around one axis, to avoid introducing image rotation. In addition, because the optical path steering element does not need to perform swing movement, relative positions of the optical path steering element and a lens group are fixed, and a larger margin can be provided in limited space for design and deployment of the lens group. In other words, the first image stabilization component and the second image stabilization component do not affect each other and are not coupled, and control logic is simple. In other words, movement of each axis is decoupled through two-stage image stabilization, to overcome a contradiction between an image stabilization angle and module space, avoid introducing image rotation (for example, image deflection caused by rotation of the optical path steering element around a Z axis), and ensure image quality.

In another possible implementation, the optical image stabilization solution provided in embodiments of this application includes step 1001 to step 1005. In this case, image stabilization of the periscope camera module on the plane on which the imaging element is located is further implemented. Further, the optical path steering unit rotates around the first axis, the imaging element moves along the first axis, and the imaging element rotates around the second axis, to implement multi-axis image stabilization, increase an image stabilization dimension and an image stabilization gain, and improve imaging quality.

FIG. 11 shows another embodiment of a terminal device according to an embodiment of this application. The terminal device may be used in the periscope camera module in any one of FIG. 2 to FIG. 9. The terminal device includes:
an obtaining unit 1101, configured to obtain shaking data of a periscope camera module;
a decomposition unit 1102, configured to decompose the shaking data into first compensation data and second compensation data, where the first compensation data is a first rotation angle of an optical path steering element around a first axis, and the second compensation data includes a translation distance of an imaging element along the first axis, the first axis is perpendicular to a plane formed by an input optical axis and an output optical axis of the optical path steering element, and the optical path steering element is configured to perform angle folding on incident light, and then perform imaging on the imaging element through a lens group;
a first control unit 1103, configured to control a first image stabilization component to drive the optical path steering to rotate around the first axis based on the first rotation angle; and
a second control unit 1104, configured to control a second image stabilization component to drive the imaging element to translate along the first axis based on the translation distance.

The first control unit 1103 and the second control unit 1104 may be understood as parallel branches output by the decomposition unit 1102.

Optionally, after controlling the first image stabilization component to perform shaking compensation, the first control unit 1103 may feed back a first shaking result to the decomposition unit 1102 (which may be understood as a system closed loop). Alternatively, a first shaking result is obtained from the first image stabilization component (which may be understood as a self-closed loop).

Optionally, after controlling the second image stabilization component to perform shaking compensation, the second control unit 1104 may feed back a second shaking result to the decomposition unit 1102 (which may be understood as a system closed loop). Alternatively, a second shaking result is obtained from the second image stabilization component (which may be understood as a self-closed loop).

Optionally, the second compensation data further includes a second rotation angle of the imaging element around a second axis, and the second axis is parallel to the output optical axis of the optical path steering element. The second control unit 1104 is further configured to control the second image stabilization component to drive the imaging element to move around the second axis based on the second rotation angle.

In this embodiment, operations performed by the units of the terminal device are similar to those described in the foregoing embodiments shown in FIG. 10. Details are not described herein again.

In this embodiment, when the first control unit 1103 controls the first image stabilization component to perform shaking compensation in a vertical direction by driving the optical path steering element to move, a large image stabilization angle can be met without a large translation distance being set in the direction. When the second control unit 1104 controls the second image stabilization component to perform translational shaking compensation by driving the imaging element to move, movable space is not limited by a module height, and an image stabilization requirement is met. In addition, in comparison with a scenario in which the optical path steering element is driven to move in two axes, in this scenario, only the first image stabilization component is controlled to drive the optical path steering element to rotate around one axis, to avoid introducing image rotation. In addition, because the optical path steering element does not need to perform swing movement, relative positions of the optical path steering element and the lens group are fixed, and a larger margin can be provided in limited space for design and deployment of the lens group. In other words, the first image stabilization component and the second image stabilization component do not affect each other and are not coupled, and control logic is simple. In other words, movement of each axis is decoupled through two-stage image stabilization, to overcome a contradiction between an image stabilization angle and module space, avoid introducing image rotation (for example, image deflection caused by rotation of the optical path steering element around a Z axis), and ensure image quality.

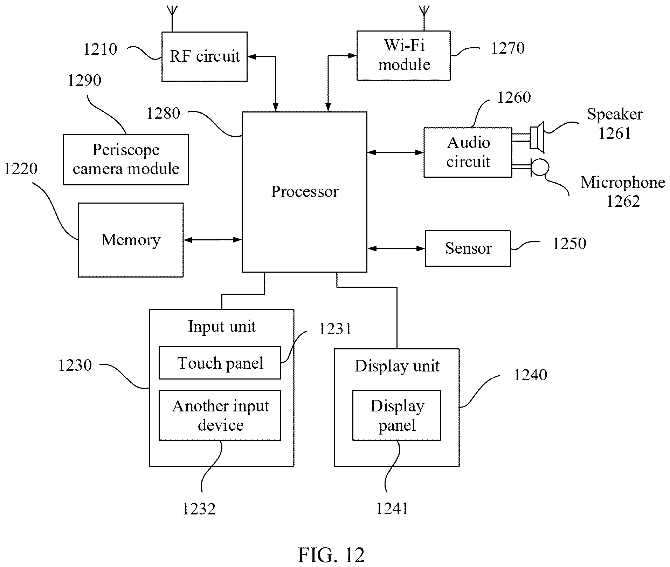

Refer to FIG. 12. An embodiment of this application provides another terminal device. For ease of description, only a part related to embodiments of this application is shown. For specific technical details that are not disclosed, refer to the method part in embodiments of this application. The terminal device may be any terminal device like a mobile phone, a tablet computer, a smart wearable device, a video surveillance device, a personal digital assistant (personal digital assistant, PDA), a point of sales (point of sales, POS), or a vehicle-mounted computer. For example, the terminal device is a mobile phone.

FIG. 12 is a block diagram of a partial structure of a mobile phone related to the terminal device according to an embodiment of this application. Refer to FIG. 12. The mobile phone includes parts such as a radio frequency (radio frequency, RF) circuit 1210, a memory 1220, an input unit 1230, a display unit 1240, a sensor 1250, an audio circuit 1260, a wireless fidelity (wireless fidelity, Wi-Fi) module 1270, a processor 1280, and a power supply 1290. A person skilled in the art may understand that the structure of the mobile phone shown in FIG. 12 imposes no limitation on the mobile phone, and the mobile phone may include components more or fewer than those shown in the figure, or some components may be combined, or different component arrangements may be used.

The following describes the parts of the mobile phone in detail with reference to FIG. 12.

The RF circuit 1210 may be configured to receive and send a signal in an information receiving or sending process or a call process; in particular, after receiving downlink information from a base station, send the downlink information to the processor 1280 for processing; and in addition, send designed uplink data to the base station. The RF circuit 1210 usually includes but is not limited to an antenna, at least one amplifier, a transceiver, a coupler, a low noise amplifier (low noise amplifier, LNA), a duplexer, and the like. In addition, the RF circuit 1210 may further communicate with a network and another device through wireless communication. The foregoing wireless communication may use any communication standard or protocol, including but not limited to a global system for mobile communication (global system of mobile communication, GSM), a general packet radio service (general packet radio service, GPRS), code division multiple access (code division multiple access, CDMA), wideband code division multiple access (wideband code division multiple access, WCDMA), long term evolution (long term evolution, LTE), an email, a short messaging service (short messaging service, SMS), and the like.

The memory 1220 may be configured to store a software program and a module. The processor 1280 performs various function applications and data processing of the mobile phone by running the software program and the module that are stored in the memory 1220. The memory 1220 may mainly include a program storage area and a data storage area. The program storage area may store an operating system, an application required by at least one function (such as a sound playing function and an image playing function), and the like. The data storage area may store data (such as audio data and an address book) created based on use of the mobile phone, and the like. In addition, the memory 1220 may include a high-speed random access memory, or may include a nonvolatile memory, such as at least one magnetic disk storage device, a flash memory device, or another volatile solid-state storage device.

The input unit 1230 may be configured to receive entered digital or character information, and generate a key signal input related to user setting and function control of the mobile phone. Specifically, the input unit 1230 may include a touch panel 1231 and another input device 1232. The touch panel 1231, also referred to as a touchscreen, can collect a touch operation performed by a user on or near the touch panel 1231 (for example, an operation performed by the user on or near the touch panel 1231 by using any proper object or accessory such as a finger or a stylus), and drive a corresponding connection apparatus based on a preset program. Optionally, the touch panel 1231 may include two parts: a touch detection apparatus and a touch controller. The touch detection apparatus detects a touch position of the user, detects a signal brought by a touch operation, and transfers the signal to the touch controller. The touch controller receives touch information from the touch detection apparatus, converts the touch information into touch point coordinates, and sends the touch point coordinates to the processor 1280, and can receive and execute a command sent by the processor 1280. In addition, the touch panel 1231 may be implemented by using a plurality of types, such as a resistive type, a capacitive type, an infrared ray type, and a surface acoustic wave type. In addition to the touch panel 1231, the input unit 1230 may further include the another input device 1232. Specifically, the another input device 1232 may include but is not limited to one or more of a physical keyboard, a function button (such as a volume control button or a switch button), a trackball, a mouse, a joystick, and the like.

The display unit 1240 may be configured to display information entered by the user or information provided for the user, and various menus of the mobile phone. The display unit 1240 may include a display panel 1241. Optionally, the display panel 1241 may be configured by using a liquid crystal display (liquid crystal display, LCD), an organic light-emitting diode (organic light-emitting diode, OLED), or the like. Further, the touch panel 1231 may cover the display panel 1241. When detecting the touch operation on or near the touch panel 1231, the touch panel 1231 transfers the touch operation to the processor 1280 to determine a type of a touch event, and then the processor 1280 provides a corresponding visual output on the display panel 1241 based on the type of the touch event. Although, in FIG. 12, the touch panel 1231 and the display panel 1241 are used as two independent components to implement input and input functions of the mobile phone, in some embodiments, the touch panel 1231 and the display panel 1241 may be integrated to implement the input and output functions of the mobile phone.

The mobile phone may further include at least one sensor 1250, for example, a light sensor, a movement sensor, and another sensor. Specifically, the light sensor may include an ambient light sensor and a proximity sensor. The ambient light sensor may adjust luminance of the display panel 1241 based on brightness of ambient light, and when the mobile phone moves near an ear, the proximity sensor may turn off the display panel 1241 and/or backlight. As a type of movement sensor, an accelerometer sensor may detect a value of acceleration in each direction (usually on three axes), may detect a value and a direction of gravity in a stationary state, and may be used in an application for identifying a mobile phone posture (such as screen switching between a landscape mode and a portrait mode, a related game, or magnetometer posture calibration), a function related to vibration identification (such as a pedometer or a knock), or the like. Other sensors such as a gyroscope, a barometer, a hygrometer, a thermometer, or an infrared sensor may be further configured in the mobile phone. Details are not described herein.

The audio circuit 1260, a speaker 1261, and a microphone 1262 may provide an audio interface between the user and the mobile phone. The audio circuit 1260 may transmit, to the speaker 1261, a received electrical signal converted from audio data, and the speaker 1261 converts the electrical signal into a sound signal for output. In addition, the microphone 1262 converts a collected sound signal into an electrical signal. The audio circuit 1260 receives the electrical signal and converts the electrical signal into audio data. Then, the audio data is output to the processor 1280 for processing and then is sent to, for example, another mobile phone through the RF circuit 1210, or the audio data is output to the memory 1220 for further processing.

Wi-Fi belongs to a short-range wireless transmission technology. The mobile phone may help, through the Wi-Fi module 1270, the user to send and receive an email, browse a web page, access streaming media, and the like. The Wi-Fi module 1270 provides wireless broadband Internet access for the user. Although FIG. 12 shows the Wi-Fi module 1270, it may be understood that the Wi-Fi module 1270 is not a mandatory component of the mobile phone.

The processor 1280 is a control center of the mobile phone, is connected to each part of the entire mobile phone through various interfaces and lines, and by running or executing the software program and/or the module that are/is stored in the memory 1220 and by invoking data stored in the memory 1220, performs various functions of the mobile phone and processes data, so as to perform overall monitoring on the mobile phone. Optionally, the processor 1280 may include one or more processing units. Preferably, the processor 1280 may integrate an application processor and a modem processor. The application processor mainly processes an operating system, a user interface, an application, and the like, and the modem processor mainly processes wireless communication. It can be understood that the modem processor may alternatively be not integrated into the processor 1280.

The mobile phone further includes a periscope camera module 1290. For descriptions of the periscope camera module, refer to the descriptions in FIG. 2 to FIG. 10. Details are not described herein again.

Although not shown, the mobile phone may further include a power supply, a Bluetooth module, and the like. Details are not described herein.

In this embodiment of this application, the processor 1280 included in the terminal device may further perform the method in embodiments shown in FIG. 10. Details are not described herein again.

An embodiment of this application further provides a computer-readable storage medium storing one or more computer-executable instructions. When the computer-executable instructions are executed by a processor, the processor performs the method in the possible implementations of the terminal device/the periscope camera module in the foregoing embodiments.

An embodiment of this application further provides one or more computer program products (or referred to as computer programs) of a computer. When the computer program product is executed by a processor, the processor performs the method in the possible implementations of the foregoing terminal device/the periscope camera module.

An embodiment of this application further provides a chip system. The chip system includes at least one processor, configured to support a terminal device in implementing the functions in embodiments shown in FIG. 10. Optionally, the chip system further includes an interface circuit, and the interface circuit provides program instructions and/or data for the at least one processor. In a possible design, the chip system may further include a memory. The memory is configured to store program instructions and data that are necessary for the terminal device. The chip system may include a chip, or may include a chip and another discrete component.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit. The integrated unit may be implemented in a form of hardware, or may be implemented in a form of a software function unit.

When the integrated unit is implemented in the form of the software function unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium, and includes several instructions to enable a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (ROM, read-only memory), a random access memory (RAM, random access memory), a magnetic disk, or an optical disc.

## Claims

1. A periscope camera module, comprising an optical path steering element, a lens group, an imaging element, a first image stabilization component, and a second image stabilization component, wherein
the optical path steering element is configured to perform angle folding on incident light, and then perform imaging on the imaging element through the lens group;
the first image stabilization component is connected to the optical path steering element, and is configured to drive the optical path steering element to rotate around the first axis, wherein the first axis is perpendicular to a plane formed by an input optical axis and an output optical axis of the optical path steering element; and
the second image stabilization component is flexibly connected to the imaging element, and is configured to drive the imaging element to move in an extension direction of the first axis.

2. The periscope camera module according to claim 1, wherein the second image stabilization component is further configured to drive the imaging element to rotate around a second axis, and the second axis is parallel to the output optical axis of the optical path steering element.

3. The periscope camera module according to claim 1 or 2, wherein the first image stabilization component has a tilted platform, and the optical path steering unit is drivably disposed on the platform.

4. A terminal device, comprising:
a housing and the periscope camera module according to any one of claims 1 to 3, wherein the periscope camera module is mounted on the housing.

5. An optical image stabilization method, applied to a periscope camera module, wherein the periscope camera module comprises an optical path steering element, a lens group, an imaging element, a first image stabilization component, and a second image stabilization component, wherein the optical path steering element is configured to perform angle folding on incident light, and then perform imaging on the imaging element through the lens group; the first image stabilization component is connected to the optical path steering element, and is configured to drive the optical path steering element to rotate around the first axis, wherein the first axis is perpendicular to a plane formed by an input optical axis and an output optical axis of the optical path steering element; and the second image stabilization component is flexibly connected to the imaging element, and is configured to drive the imaging element to move in an extension direction of the first axis; and
the method comprises:
obtaining shaking data of the periscope camera module;
decomposing the shaking data into first compensation data and second compensation data, wherein the first compensation data is a first rotation angle of the optical path steering element around the first axis, and the second compensation data comprises a translation distance of the imaging element along the first axis;
controlling the first image stabilization component to drive the optical path steering element to rotate around the first axis based on the first rotation angle; and
controlling the second image stabilization component to drive the imaging element to translate along the first axis based on the translation distance.

6. The method according to claim 5, wherein the second image stabilization component is further configured to drive the imaging element to rotate around a second axis, and the second axis is parallel to the output optical axis of the optical path steering element; and the second compensation data further comprises a second rotation angle of the imaging element around the second axis; and
the method further comprises:
controlling the second image stabilization component to drive the imaging element to move around the second axis based on the second rotation angle.

7. A terminal device, wherein a periscope camera module is used in the terminal device, and the periscope camera module comprises an optical path steering element, a lens group, an imaging element, a first image stabilization component, and a second image stabilization component, wherein the optical path steering element is configured to perform angle folding on incident light, and then perform imaging on the imaging element through the lens group; the first image stabilization component is connected to the optical path steering element, and is configured to drive the optical path steering element to rotate around the first axis, wherein the first axis is perpendicular to a plane formed by an input optical axis and an output optical axis of the optical path steering element; and the second image stabilization component is flexibly connected to the imaging element, and is configured to drive the imaging element to move in an extension direction of the first axis; and
the terminal device comprises:
an obtaining unit, configured to obtain shaking data of the periscope camera module;
a decomposition unit, configured to decompose the shaking data into first compensation data and second compensation data, wherein the first compensation data is a first rotation angle of the optical path steering element around the first axis, and the second compensation data comprises a translation distance of the imaging element along the first axis;
a first control unit, configured to control the first image stabilization component to drive the optical path steering to rotate around the first axis based on the first rotation angle; and
a second control unit, configured to control the second image stabilization component to drive the imaging element to translate along the first axis based on the translation distance.

8. The terminal device according to claim 7, wherein the second image stabilization component is further configured to drive the imaging element to rotate around a second axis, and the second axis is parallel to the output optical axis of the optical path steering element; and the second compensation data further comprises a second rotation angle of the imaging element around the second axis; and
the second control unit is further configured to control the second image stabilization component to drive the imaging element to move around the second axis based on the second rotation angle.

9. A terminal device, comprising a processor, wherein the processor is coupled to a memory, the memory is configured to store a program or instructions, and when the program or the instructions are executed by the processor, the terminal device is enabled to perform the method according to claim 5 or 6.

10. A chip, wherein the chip comprises a processor and a communication interface, the communication interface is coupled to the processor, and the processor is configured to run a computer program or instructions, so that the method according to claim 5 or 6 is performed.

11. A computer storage medium, comprising computer instructions, wherein when the computer instructions are run on a terminal device, the terminal device is enabled to perform the method according to claim 5 or 6.
